# EUROPÄISCHE PATENTSCHRIFT

(11) **EP 0 379 163 B1**
(45) Veröffentlichungstag und Bekanntmachung des Hinweises auf die Patenterteilung: **31.03.1993**
(21) Anmeldenummer: 90100894.6
(22) Anmeldetag: 17.01.1990
(51) Int. Cl.: B60K 41/10, B60K 41/06

(54) **Betätigungseinrichtung zur Umschaltung eines Getriebes**
Operating device for shifting gears
Système de commande pour changement de vitesse dans une transmission

(30) Priorität: 19.01.1989 DE 3901421
(43) Veröffentlichungstag der Anmeldung: 25.07.1990
(73) Patentinhaber: DEERE & COMPANY, Moline, Illinois 61265 (US)
(72) Erfinder: Zahn, Klaus, D-7524 Oestringen 2 (DE); Schmidt, Werner, D-6800 Mannheim 24 (DE)
(74) Vertreter: Feldmann, Bernhard

(56) Entgegenhaltungen:
- DE-A- 2 700 548
- DE-A- 3 334 721
- DE-A- 3 608 208
- DE-A- 3 627 718
- US-A- 4 274 306
- US-A- 4 551 802

## Beschreibung

Die Erfindung betrifft eine Betätigungseinrichtung zur Umschaltung eines einer Verbrennungskraftmaschine nachgeschalteten Getriebes, insbesondere mit Lastschaltstufe, gemäß den Merkmalen des Oberbegriffes des Patentanspruches 1.

Aus der US-A-4,551,802 geht eine Steuereinrichtung für ein automatisches Gangschaltfahrzeuggetriebe hervor, welches durch eine Verbrennungskraftmaschine angetrieben wird. Die Meßwerte der Einstellage einer Kraftstoffzufuhreinrichtung und der Maschinendrehzahl werden einer Steuereinheit zugeführt und durch diese ausgewertet. Aus den Meßwerten und aus den Änderungsgeschwindigkeiten der Meßwerte ermittelt die Steuereinheit anhand eines Programmes ein geeignetes Übertragungsverhältnis für das Gangschaltgetriebe und gibt Steuersignale zur Umschaltung des Gangschaltgetriebes ab, um einen möglichst treibstoffsparenden, jedoch leistungsfähigen Betrieb des Fahrzeuges zu ermöglichen. Für die Ansteuerung eines Lastschaltgetriebes erscheint das beschriebene Steuerverfahren jedoch ungeeignet zu sein.

Eine Lastschaltstufe, fürdie die Erfindung bevorzugt Anwendung finden soll, findet insbesondere in Ackerschleppern Verwendung. Die Lastschaltstufe ist gewöhnlich zwischen Kupplung und einem normalen Schaltgetriebe angebracht. Sie ist ein unter Last hydraulisch schaltbares Planetenradgetriebe, welches die Motordrehzahl entweder unverändert oder um einen bestimmten Betrag, beispielsweise 20 %, reduziert überträgt. Bei der Reduzierung der Motordrehzahl erhöht sich das auf die Antriebsräder übertragene Drehmoment.

In einer ersten Schaltstellung für normale Fahrgeschwindigkeit wird durch hydraulische Betätigung einer Lamellenkupplung der Planetenradträger fest mit einem inneren Sonnenrad verbunden. Der Planetenträger dreht sich somit mit dem Sonnenrad mit. Dies führt dazu, daß die Eingangsund Ausgangswelle der Lastschaltstufe sich mit gleicher Drehzahl drehen.

In einer zweiten Schaltstellung wird der Planetenradträger mittels einer hydraulisch betätigbaren Lamellenbremse gegenüber dem Getriebegehäuse arretiert. Der Kraftfluß geht nun über das mit der Antriebswelle verbundene Sonnenrad zu dem Planetenrad, wo eine Untersetzung auf das mit der Laststufenausgangswelle befestigte zweite Sonnenrad erfolgt. Die Ausgangsdrehzahl der Lastschaltstufe ist damit gegenüber ihrer Eingangsdrehzahl reduziert. Gleichzeitig erhöht sich das abgegebene Drehmoment.

Die zweite Schaltstellung der Lastschaltstufe wird dann eingelegt, wenn ein erhöhtes Drehmoment von dem Antrieb gefordert wird. Die Umschaltung zwischen den beiden Schaltstellungen ist ohne Unterbrechung des Kraftflusses zwischen der Antriebsmaschine und dem Radantrieb möglich.

Die Umschaltung der Lastschaltstufe wird üblicherweise durch manuelle Betätigung eines Schalthebels in der Fahrzeugkabine vorgenommen, mittels dessen ein Hydraulikventil steuerbar ist. Das Hydraulikventil leitet wahlweise Drucköl zu der Lamellenkupplung und der Lamellenbremse der Lastschaltstufe.

Eine Umschaltung von der ersten in die zweite Schaltstellung soll dann vorgenommen werden, wenn die Belastung des Antriebes (z. B. infolge eines Anstieges der Fahrbahn oder einer Änderung der Bodenbeschaffenheit) so weit ansteigt, daß die Drehzahl der Antriebsmaschine abnimmt und unter den Bereich höchstmöglicher Leistung abfällt. Die Umschaltung bewirkt eine Erhöhung der Antriebsmaschinendrehzahl bei gleichbleibender Fahrgeschwindigkeit. Durch sie können die Produktivität des Antriebes verbessert und die Drehmomentreserven erheblich gesteigert werden.

Bei abnehmender Belastung des Antriebes sollte eine Umschaltung von der zweiten in die erste Schaltstellung dann erfolgen, wenn die Nenndrehzahl der Antriebsmaschine überschritten wird und ein starker Leistungsabfall in der Leistungskurve einsetzt. Anderenfalls fällt die Leistung der Antriebsmaschine stark ab, und der spezifische Treibstoffverbrauch steigt sprunghaft an.

Die Umschaltpunkte legt die Bedienungsperson anhand ihrer Erfahrung fest. Die Umschaltung von der zweiten in die erste Schaltstellung erfolgt jedoch meistens bei zu hohen Drehzahlen. Hierdurch ergibt sich zwar ein stabiles Fahrverhalten, jedoch arbeitetdie Antriebsmaschine nicht mehr mit höchstmöglicher Leistung. Ferner steigt der Kraftstoffverbrauch an.

Die mit der Erfindung zu lösende Aufgabe wird darin gesehen, eine Betätigungseinrichtung zur Umschaltung eines Getriebes der eingangs genannten Art anzugeben, mit deren Hilfe der Bedienungskomfort für das Getriebe, insbesondere für die Lastschaltstufe, gesteigert und zugleich die Effektivität des Antriebes verbessert werden kann.

Die Aufgabe wird ausgehend vom Oberbegriff des Patentanspruches 1 durch dessen kennzeichnende Merkmale gelöst.

Der untere Umschaltpunkt, bei dem eine Heraufschaltung der Kraftmaschinendrehzahl (Umschaltung von der ersten in die zweite Schaltstellung) erfolgen soll, wird dabei durch einen unteren vorgebbaren Drehzahlwert festgelegt, der so ausgewählt ist, daß bei diesem Drehzahlwert die Maschinenleistung bereits einen Wert nahe ihrer Maximalleistung (oberes Leistungsniveau) einnimmt. Insbesondere Ackerschlepper weisen häufig für höhere Maschinendrehzahlen ein oberes Leistungsniveau auf, dessen untere Drehzahlgrenze den Umschaltpunkt festlegen kann. Im Drehzahlbereich des oberen Leistungsniveaus weist die zugehörige Drehmomentenkennlinie eine negative Steigung mit entsprechender Drehmomentenreserve auf.

Der Grundgedanke, der dieser Lösung zugrunde liegt, ist darin zu sehen, daß das Lastschaltgetriebe in Abhängigkeit der Motorleistung automatisch geschaltet werden soll. Die Motorleistung steht jedoch nicht als direkte Meßgröße zurverfügung, da sie eine aus Drehmoment und Drehzahl abgeleitete Größe ist. Man könnte daher die Umschaltung bei bestimmten festzulegenden Drehmomentenwerten vornehmen. Die Drehmomentenwerte ließen sich direkt über eine Drehmomentenmeßnabe oder indirekt über den Kraftstoffverbrauch oder dieAbgastemperaturermitteln. Die Ermittlung des Drehmomentes ist jedoch relativ aufwendig. Entsprechende Meßwerte müßten eigens für die Betätigungseinrichtung zur Umschaltung erhoben werden, da sie gewöhnlicherweise bei Fahrzeugen nicht zur Verfügung stehen.

Die Erfindung schlägt daher vor, die Kraftmaschinendrehzahl zur Festlegung der Umschaltpunkte heranzuziehen. Die Kraftmaschinendrehzahl steht bei vielen Fahrzeugen als Meßsignal zur Verfügung, um eine Drehzahlanzeige in der Fahrzeugkabine zu ermöglichen. Allerdings gibt die Kraftmaschinendrehzahl allein noch keine Aussage über die Belastung der Antriebsmaschine. Diese Aussage ist jedoch dann möglich, wenn gleichzeitig Informationen über die Kraftstoffzufuhr vorliegen. Für eine bestimmte Kraftstoffzufuhr ergibt sich ein eindeutiger Zusammenhang zwischen Maschinendrehzahl, Maschinendrehmoment und Maschinenleistung. Wird also eine bestimmte Kraftstoffzufuhr zugrunde gelegt, so können Umschaltpunkte für das Getriebe durch Vorgabe bestimmter Kraftmaschinendrehzahlen festgelegt werden. Die automatische Betätigungseinrichtung bewährt sich besonders bei hohen Maschinenbelastungen. Hohe Maschinenleistungen werden beispielsweise beim Hauptbodenbearbeitungsvorgang (Pflügen) von einem Ackerschlepper verlangt. Insbesondere hierbei sorgt die automatische Betätigungsvorrichtung für einen verbesserten Fahrkomfort während häufiger Lastwechsel, die aufgrund unterschiedlicher Bodenverdichtung und/oder hügliger Felder auftreten können, wenn die Schlepperbelastung innerhalb eines Bereiches schwankt, welcher durch die Maschinendrehmomentreserven gemeinsam mit der automatischen Umschaltbetätigung abgedeckt werden kann.

Die automatische Betätigungseinrichtung führt zu einer Steigerung der Produktivität, wobei sich ohne manuellen Eingriff die Drehmomentreserven erhöhen lassen. Durch geeignete Einstellung der Umschaltpunkte (vorgebbare Kraftmaschinendrehzahlwerte) läßt sich auch der Kraftstoffverbrauch vermindern.

Ein weiterer Vorteil der automatischen Betätigungseinrichtung ist darin zu sehen, daß im Vergleich mit einer manuellen Einstellung während rauher Arbeitsbedingungen die automatische Umschaltung des Getriebes bezüglich der höchstmöglichen Maschinenleistung genauer einstellbar ist. Auch sind die Schaltzeiten, die zum Erreichen der Endlagen bei der Umschaltung erforderlich sind, bei einer Automatik genauer definiert. Dies hat einen positiven Einfluß auf die Zuverlässigkeit der Betätigungseinrichtung.

Die Steuerung der Betätigungseinrichtung kann weitgehend elektrisch erfolgen, so daß mechanische Gestänge und dergleichen entfallen können.

Vorzugsweise enthält die mit einem Einstellelement für die Kraftstoffzufuhr in Verbindung stehende Schaltvorrichtung einen Endschalter. Dieser Endschalter ist im Bereich des Gasgestänges montiert und läßt sich durch dieses betätigen. Als Gasgestänge kommt beispielsweise für einen Dieselmotor der Drehzahleinstellhebel der Einspritzpumpe oder bei einem Benzinmotor die Drosselklappe des Vergasers bzw. die entsprechenden Betätigungshebel in Betracht. Als Endschalter kann ein einfacher Mikroschalter verwendet werden, der dann schaltet, wenn ein vorgebbarer Kraftstoffzufuhreinstellwert überschritten wird.

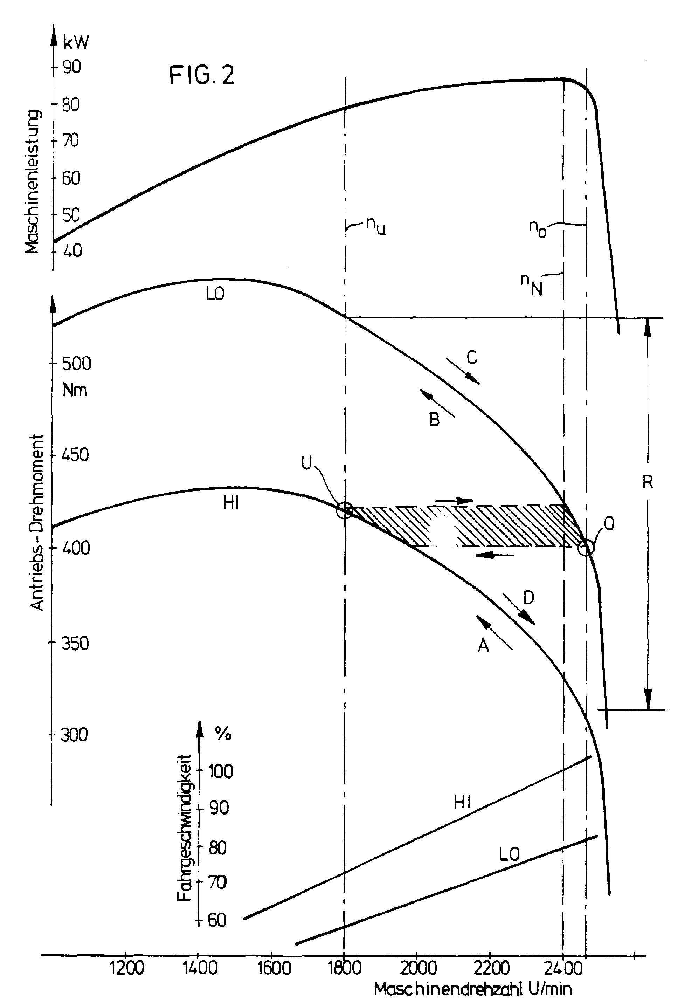

Dieser vorgebbare Kraftstoffzufuhreinstellwert entspricht zweckmäßigerweise der Vollgasposition des Einstellelementes. In Vollgasposition wird zu jedem Maschinendrehzahlwert das zugehörige maximale Drehmoment bzw. die zugehörige maximale Maschinenleistung abgegeben (siehe Kennlinien gemäß Fig. 2). Bei der Vollgasposition wird daher die maximale Maschinenleistung ausgenutzt. Erfolgt eine Betätigung der Schaltvorrichtung dagegen schon bei einem Teillastbetrieb, so ist eine Umschaltung des Getriebes gewöhnlich noch nicht erforderlich, da der steigenden Lastanforderung durch Betätigen des Gaspedals Rechnung getragen werden könnte.

Die Einrichtung zur Erfassung der Kraftmaschinendrehzahl ist vorzugsweise ein an der Verbrennungskraftmaschine angeschlossener Drehzahlgeber. Grundsätzlich könnte die Maschinendrehzahl auch durch Messung der Drehzahl an einer anderen Stelle des Antriebsstranges ermittelt werden; hierzu wäre jedoch das Übersetzungsverhältnis zwischengeschalteter Getriebe zu berücksichtigen. Als Drehzahlgeber kommt beispielsweise ein magnetischer Geber in Betracht, der ein der Drehzahl proportionales, elektrisches Signal abgibt.

Einer vorteilhaften Ausgestaltung der Erfindung zufolge ist als ein oberer Umschaltpunkt, bei dem eine Herunterschaltung der Kraftmaschinendrehzahl (Umschaltung von der zweiten in die erste Schaltstellung) erfolgen soll, ein oberer Drehzahlwertvorgegeben, deretwa bei der Nenndrehzahl der Kraftmaschine liegt. Damit wird die Maschinenleistung voll ausgenutzt, wobei es jedoch vermieden wird, daß die Maschine in dem stark abfallenden Zweig der Leistungskennlinie betrieben wird.

Vorzugsweise liegt der obere Drehzahlwert etwas oberhalb der Nenndrehzahl, jedoch nicht so hoch, daß eine störende Kraftstoffverbrauchzunahme eintritt. Der obere Drehzahlwert kann beispielsweise um 30 U/min nach oben oder unten von der Nenndrehzahl der Kraftmaschine abweichen.

Während der obere Drehzahlwert relativ nahe bei der Nenndrehzahl eingestellt werden muß, kann der untere Drehzahlwert innerhalb eines relativ großen Bereiches festgelegt werden, ohne daß Nachteile für die automatische Umschaltung auftreten, da hier keine so starke Abhängigkeit des Kraftstoffverbrauches von der Drehzahl gegeben ist.

Vorzugsweise wird der untere Umschaltpunkt so eingestellt, daß der zugehörige Drehmomentenwert etwas größer ist als der Drehmomentenwert, der dem oberen Umschaltpunkt zugeordnet ist. Hierdurch ergibt sich bei Umschaltvorgängen von der ersten in die zweite Schaltstellung oder umgekehrt ein Hysteresisverhalten, durch das ein zu häufiges (rasches) Umschalten vermieden wird, wenn das Antriebsdrehmoment Werte in der Nähe der Umschaltpunkte einnimmt.

Zweckmäßigerweise weist die Betätigungseinrichtung für die Umschaltung einen manuell betätigbaren Schalter mit wenigstens drei Schaltpositionen auf. Durch eine Schaltposition wird der Automatikbetrieb eingeschaltet, während durch die anderen Positionen sich manuell bestimmte Getriebeschaltstufen einstellen lassen. Hierdurch läßt sich, falls gewünscht, die Automatik außer Betrieb nehmen und das Getriebe konventionell schalten.

Anhand der Zeichnung, die ein Ausführungsbeispiel der Erfindung zeigt, sollen die Erfindung sowie weitere Vorteile und vorteilhafte Ausgestaltungen der Erfindung erläutert und näher beschrieben werden.

Es zeigt:
Fig. 1 das Schnittbild eines Lastschaltgetriebes sowie eine erfindungsgemäße Betätigungseinrichtung und
Fig. 2 Maschinenkennlinien.

Das Lastschaltgetriebe 10 ist durch eine Antriebswelle 11, die zur Verbrennungskraftmaschine führt, und eine Getriebeeingangswelle 12, die mit einem Schaltgetriebe in Verbindung steht, in den Antriebsstrang eines nicht dargestellten Schleppers eingefügt. Die Antriebswelle 11 treibt ein erstes Sonnenrad 13 an. Die Getriebeeingangswelle 12 steht mit einem zweiten Sonnenrad 14 und einer Kupplungsnabe 15 kraftschlüssig in Verbindung. Am Umfang der Sonnenräder 13,14 sind mehrere Planetenräder 16, von denen zwei dargestellt wurden, angeordnet. Die Planetenräder weisen jeweils zwei Zahnräder 17, 18 unterschiedlichen Durchmessers auf.

Die Planetenräder 16 werden durch einen Planetenradträger 19 getragen. Zwischen dem Planetenradträger 19 und der Kupplungsnabe 15 befindet sich eine Lamellenkupplung 20, die durch einen Kolben 21 hydraulisch betätigbar ist. Wird der Kolben 21 mit unter Druck stehendem Öl, welches durch einen Druckölkanal 22 geleitet wird, beaufschlagt, so preßt er die Lamellen der Lamellenkupplung 20 zusammen und verbindet den Planentenradträger 19 kraftschlüssig mit der Kupplungsnabe 15. Läßt der Öldruck nach, so wird der Kolben 21 infolge der Vorspannungskraft von Tellerfedern 28 zurückgeschoben, so daß sich die Lamellenkupplung 20 öffnet.

Zwischen dem äußeren Umfang des Planetenradträgers 19 und einem Bremsgehäuse 23, welches mit dem Getriebegehäuse starr in Verbindung steht, ist eine Lamellenbremse 24 angeordnet. Im unbelasteten Zustand verbindet die Lamellenbremse 24 den Planetenträger 19 mit dem Bremsgehäuse 23. Hierbei werden die Lamellen durch ein durch Tellerfedern 25 belastetes Joch 26 aufeinandergedrückt. Das Joch 26 steht mit einem hydraulisch betätigbaren Kolben 27 in Verbindung. Wird der Kolben 27 durch Drucköl beaufschlagt, so bewegt er das Joch 26 gegen die Kraft der Tellerfedern 25 und löst den Kraftschluß der Lamellen der Lamellenbremse 24.

Der Druckölkanal 22 steht über ein Steuerventil 30 und eine Druckölzufuhr 31 mit einem Druckölbehälter, der nicht dargestellt wurde, in Verbindung. Öffnet das Steuerventil 30, so wird Drucköl in den Druckölkanal 22 geleitet. Dabei werden die beiden Kolben 21 und 27 aus ihrer Ruhestellung verschoben. Der Kolben 21 bringt die Lamellenkupplung 20 zum Eingriff, während der Kolben 27 die Lamellenbremse 24 löst. Nunmehr besteht eine kraftschlüssige Verbindung zwischen der Kupplungsnabe 15 und dem Planetenradträger 19, welcher frei gegenüber dem Bremsgehäuse 23 verdrehbar ist. Da die Getriebeeingangswelle 12 über die Lamellenkupplung 20 kraftschlüssig mit dem Planetenradträger 19 verbunden ist, dreht sich die Getriebeeingangswelle 12 mit gleicher Drehzahl wie die Antriebswelle 11. Das Übertragungsverhältnis ist 1:1.

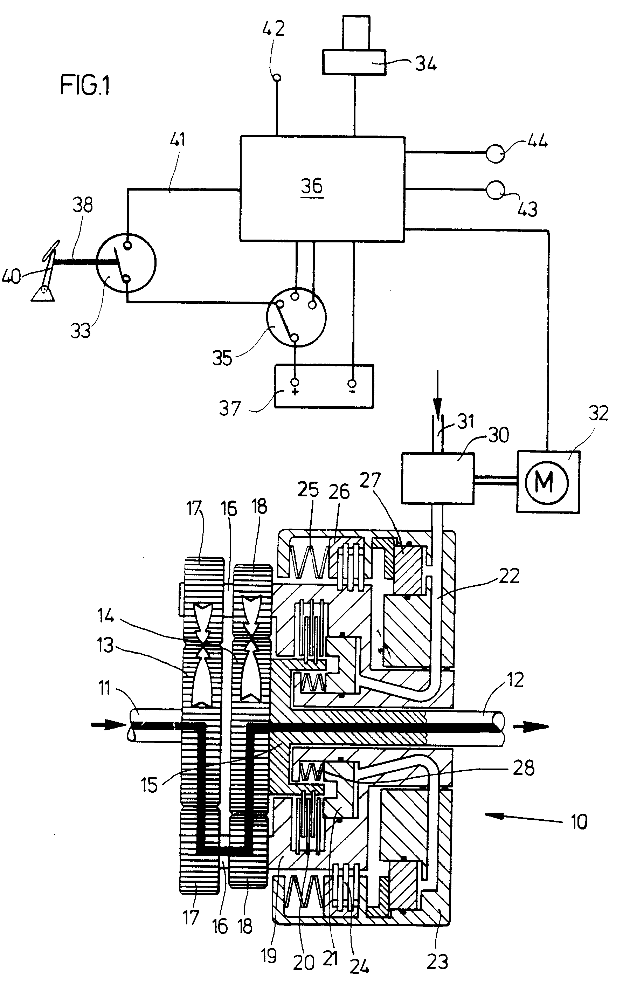

Wird das Steuerventil 30 geschlossen, so wird der Druckölkanal 22 drucklos. Die Kolben 21 und 27 werden infolge der Kraft der Tellerfedern 25, 28 in ihre Ruhelage verschoben. Dabei löst sich die Lamellenkupplung 20, während die Lamellenbremse 24 betätigt wird, so daß der Planetenradträger 19 mit dem Bremsgehäuse 23 kraftschlüssig in Verbindung steht und sich nicht mehr mitdrehen kann. Der Kraftfluß verläuft nun über die Antriebswelle 11, das erste Sonnenrad 13, die Planetenräder 16 und das zweite Sonnenrad 14 mit Kupplungsnabe 15 durch die Getriebeeingangswelle 12 ins Schaltgetriebe. Dieser Kraftflußverlauf wurde durch eine starke schwarze Linie in Figur 1 angedeutet. Durch die Durchmesserverhältnisse der Zahnräder 13, 14, 17, 18 wird das Übertragungsverhältnis festgelegt. Dieses ist kleiner als 1, so daß die Antriebswelle 11 schneller umläuft als die Getriebeeingangswelle 12. Durch das Lastschaltgetriebe 10 wird die Antriebsdrehzahl hier um ca. 20 % reduziert.

Das Steuerventil 30 wird durch einen Servomotor 32 betätigt, dessen Ansteuersignale durch eine erfindungsgemäße Betätigungseinrichtung bereitgestellt werden. Die Betätigungseinrichtung umfaßt eine Schaltvorrichtung 33, einen Drehzahlgeber 34, einen Umschalter 35 und eine Steuereinheit 36. Sie wird elektrisch durch eine Batterie 37 versorgt.

Bei der Schaltvorrichtung 33 handelt es sich um einen Mikroschalter, dessen Auslöseorgan 38 mit einem Einstellelement für die Kraftstoffzufuhr in Verbindung steht. Als Einstellelement kommt beispielsweise der Gashebel in Betracht, durch den die Drosselklappe eines Vergasers bzw. eine Einspritzpumpe betätigt wird. Gemäß Figur 1 steht der Mikroschalter 33 mit einem Gaspedal 40 in Verbindung. Die Kontakte der Schaltvorrichtung 33 schließen, wenn das Einstellelement auf maximale Kraftstoffzufuhr (Vollgas bei durchgetretenem Gaspedal) eingestellt ist. In diesem Fall wird bei Einstellung des Umschalters 35 auf Automatik die Elektroniksteuereinheit 36 aktiviert.

Der Umschalter 35 weist drei Schaltstellungen auf. In zwei der Stellungen wird das Lastschaltgetriebe 10 durch die Steuereinheit 36 entweder in die erste oder in die zweite Schaltstellung gebracht. In einer dritten Schaltstellung, die gemäß Figur 1 eingenommen ist, ist der Umschalter 35 auf Automatikbetrieb eingestellt, bei dem der erfindungsgemäße Betrieb erfolgt. Der Umschalter 35 verbindet in der Automatikstellung einen Pol der Batterie 37 mit dem Schalter 33, dessen andere Klemme mit einem Automatikeingang 41 der Steuereinheit 36 verbunden ist.

Besteht eine elektrische Verbindung zwischen Batteriepol und Automatikeingang 41, so nimmt die Elektronikeinheit 36 eine Abfrage hinsichtlich der Maschinendrehzahl n vor. Anderenfalls bewirkt die Elektronikeinheit eine Schaltung des Lastschaltgetriebes 10 in seine erste Schaltstellung, in der keine Drehzahlreduzierung vorgenommen wird.

Ist die Steuereinheit 36 aktiviert (Vollgasstellung), so ist der für das Drehmoment ausschlaggebende Parameter die Motordrehzahl n. Diese kann ohne weiteres als elektrisches Signal abgenommen werden und steht bei vielen Schleppern bereits für das serienmäßige Zentral-Kontrollinstrument zur Verfügung.

Als Drehzahlgeber 34 kann ein elektrischer Drehzahlmesser verwendet werden, der die Maschinendrehzahl erfaßt. Das elektrische Maschinendrehzahlsignal wird der Elektroniksteuereinheit 36 zugeleitet und hier mit Drehzahlwerten verglichen, die als vorgebbare Umschaltpunkte über einen Eingang 42 in die Steuereinheit 36 einspeisbar sind. Es handelt sich hierbei um einen unteren und einen oberen Drehzahlwert (nᵤ, nₒ).

Die Steuereinheit 36 dient der Signalauswertung. Sie gibt elektrische Signale zur Schaltung des Lastschaltgetriebes 10 ab. Dabei wird durch das elektrische Signal ein einfacher Servomotor 32 angetrieben, der in der Nähe des Steuerventils 30 des Lastschaltgetriebes 10 angeordnet ist. Alternativ hierzu kann die Umwandlung des elektrischen Signals der Steuereinheit 36 auch durch einen Elektromagneten, der das Steuerventil des Lastschaltgetriebes 10 direkt betätigt, erfolgen. Ferner kann auch ein Lastgetriebe vorgesehen sein, dessen Kupplung und Bremse durch Elektromagneten betätigt werden und deren Betätigungssignale die Steuereinheit zur Verfügung stellt.

Unterschreitet der Maschinendrehzahlwert den unteren Drehzahlwert nᵤ, so gibt die elektronische Steuereinheit 36 ein solches Steuersignal an den Servomotor 32 ab, daß das Steuerventil 30 geschlossen wird, so daß das Lastschaltgetriebe 10 eine Untersetzung der Antriebsdrehzahl vornimmt. Übersteigt dagegen die Maschinendrehzahl einen oberen Drehzahlwert nₒ, so gibt die Steuereinheit 36 an den Servomotor 32 solche Signale ab, die das Steuerventil 30 öffnen und den Druckkanal 22 mit Drucköl füllen. Hierdurch wird das Lastschaltgetriebe 10 so geschaltet, daß sich die Antriebswelle 11 und die Getriebeeingangswelle 12 mit gleicher Umdrehungsgeschwindigkeit drehen.

Durch eine Anzeige 43, die in der Fahrerkabine angeordnet ist, wird angezeigt, mit welchem Signal der Servomotor 32 beaufschlagt wird. Dieses Signal repräsentiert, wie wir gesehen haben, den Schaltzustand des Lastschaltgetriebes 10.

In einer weiteren Anzeige 44 wird die durch den Drehzahlgeber 34 erfaßte Maschinendrehzahl in der Fahrzeugkabine angezeigt.

In Fig. 2 sind zur Verdeutlichung des Umschaltverhaltens die Kennlinien mehrerer Größen über der Maschinendrehzahl n dargestellt. Mit nᵤ ist ein unterer Drehzahlwert (unterer Umschaltpunkt), mit nₒ ist ein oberer Drehzahlwert (oberer Umschaltpunkt), und mit n_{N} ist die Nenndrehzahl der Maschine bezeichnet.

Die obere Kennlinie stellt die Maschinenleistung bei Vollgas dar. Der Kurvenverlauf läßt ein oberes, annähernd waagerecht verlaufendes Leistungsniveau zwischen dem unteren und dem oberen Drehzahlwert (nᵤ, nₒ) erkennen. Für eine effektive Ausnutzung der Maschinenleistung erfolgt eine Umschaltung des Lastschaltgetriebes 10 in der Weise, daß die Maschine nach Möglichkeit im Bereich dieses oberen Leistungsniveaus betrieben wird.

Unterhalb der Kennlinie der Maschinenleistung sind mit einem anderen Maßstab zwei Kennlinien dargestellt, die das von dem Lastschaltgetriebe 10 abgegebene Drehmoment bei Vollgasbetrieb wiedergeben. Die obere Kurve (LO) stellt das Drehmoment dar, welches bei einer Untersetzung der Antriebsdrehzahl abgegeben wird. Die untere Kennlinie (HI) stellt das Drehmoment bei einer 1:1-Übersetzung des Schaltgetriebes dar.

Unterhalb der Drehmomentenkennlinien sind die beiden zugehörigen linearen Kennlinien für die Fahrgeschwindigkeit dargestellt.

Wird der Schlepper bei Vollgas betrieben, so folgt das abgegebene Drehmoment je nach Belastung des Schleppers sowie nach Schaltzustand des Lastschaltgetriebes 10 einer der beiden Drehmomentkennlinien (HI, LO). Bei relativ geringer Belastung des Schleppers befindet sich der Arbeitspunkt auf der unteren Drehmomentenkennlinie (HI), und zwar im Bereich hoher Maschinendrehzahlen. Mit zunehmender Last wandert der Arbeitspunkt auf der unteren Drehmomentenkennlinie (HI) in Richtung des Pfeiles A. Wird der untere Drehzahlwert nᵤ erreicht, so erfolgt bei dem Punkt U eine Umschaltung des Lastschaltgetriebes 10, durch welche bei gleichbleibender Fahrgeschwindigkeit eine Erhöhung der Maschinendrehzahl ermöglicht wird. Durch die Umschaltung springt der Arbeitspunkt von der unteren Drehmomentenkennlinie (HI) auf die obere Drehmomentenkennlinie (LO). Mit weiterhin wachsender Last bewegt sich derArbeitspunkt entlang der oberen Drehmomentenkennlinie (LO) in Richtung des Pfeiles B.

Die durch die Umschaltung des Lastschaltgetriebes 10 ermöglichte Drehmomentenreserve ist mit R bezeichnet. Diese Reserve kann voll ausgenutzt werden, ohne daß ein manueller Eingriff durch eine Bedienungsperson erforderlich wäre.

Bei abnehmender Last verschiebt sich der Arbeitspunkt entlang der oberen Drehmomentenkennlinie (LO) in Richtung des Pfeiles C bis zu dem oberen Drehzahlwert nₒ. Bei Erreichen des Umschaltpunktes O wird das Lastschaltgetriebe 10 so umgeschaltet, daß bei gleichbleibender Fahrgeschwindigkeit eine Verringerung der Maschinendrehzahl eintritt. Der Arbeitspunkt springt dabei von der oberen Drehmontenkennlinie (LO) auf die untere Drehmomentenkennlinie (HI). Bei weiter abnehmender Last wandert der Arbeitspunkt entlang der unteren Drehmomentenkennlinie (HI) in Richtung des Pfeiles D.

Der untere Drehzahlwert nᵤ kann in relativ weiten Grenzen variiert werden, ohne daß dies einen nennenswerten Einfluß auf die Leistungsfähigkeit des Antriebes hätte. Im vorliegenden Beispiel könnte der untere Drehzahlwert ohne weiteres um 100 U/min nach oben oder unten verschoben werden.

Die Leistungsfähigkeit des Antriebes reagiert dagegen relativ empfindlich auf eine Verschiebung des oberen Drehzahlwertes nₒ. Schon bei einer geringfügigen Erhöhung des oberen Drehzahlwertes gelangt man in den steil abfallenden Ast der Maschinenleistungskennlinie. Dies hat eine erhebliche Steigerung des Kraftstoffverbrauchs zur Folge. Bei einer Verringerung des oberen Drehzahlwertes nₒ wird die zur Verfügung stehende Maschinenleistung nicht voll ausgenutzt. Im vorliegenden Beispiel sollte der obere Drehzahlwert nₒ nicht mehr als 20 U/min von dem angegebenen Wert abweichen.

Wird die Maschine in einem Drehmomentenbereich betrieben, der in der Nähe der beiden Umschaltpunkte U und O liegt, so kann ein häufiges Umschalten zwischen der oberen und der unteren Drehmomentenkennlinie dadurch vermieden werden, daß der Drehmomentenwert des unteren Umschaltpunktes deutlich oberhalb des Drehmomentenwertes des oberen Umschaltpunktes O liegt. Da der obere Umschaltpunkt, wie im vorhergehenden Absatz dargestellt wurde, nur wenig variierbar ist, wird der untere Drehzahlwert nᵤ so eingestellt, daß der Umschaltpunkt U bei einem höheren Drehmomentenwert liegt als der Umschaltpunkt O.

## Patentansprüche

1. Betätigungseinrichtung zur Umschaltung eines einer Verbrennungskraftmaschine nachgeschalteten Getriebes (10), insbesondere mit Lastschaltstufe, durch das in Abhängigkeit der Kraftmaschinenbelastung eine Umschaltung zwischen wenigstens zwei Drehzahlübertragungsverhältnissen vornehmbar ist, mit einer Schaltvorrichtung (33), die mit einem Einstellelement (40) für die Kraftstoffzufuhr in Verbindung steht, mit einer Einrichtung (34) zur Erfassung der Kraftmaschinendrehzahl und mit einer Steuereinheit (36), wobei die Signale der Schaltvorrichtung (33) und der Drehzahlerfassungseinrichtung (34) der Steuereinheit (36) zugeführt werden und die Steuereinheit (36) bei Über- oder Unterschreiten eines vorgebbaren Kraftstoffzufuhreinstellwertes sowie wenigstens eines vorgebbaren Kraftmaschinendrehzahlwertes (nᵤ, nₒ) Steuersignale zur automatischen Umschaltung an das Getriebe (10) abgibt, dadurch gekennzeichnet, daß als ein unterer Umschaltpunkt (U), bei dem eine Heraufschaltung der Kraftmaschinendrehzahl erfolgen soll, ein unterer Drehzahlwert (nᵤ) vorgegeben wird, der etwa bei der Drehzahl liegt, bei der die Maschinenleistung ihr oberes Leistungsniveau erreicht.

2. Betätigungseinrichtung nach Anspruch 1, dadurch gekennzeichnet, daß die Schaltvorrichtung (33) einen Endschalter enthält, der im Bereich des Gasgestänges montiert und durch dieses betätigbar ist.

3. Betätigungseinrichtung nach Anspruch 1 oder 2, dadurch gekennzeichnet, daß der vorgebbare Kraftstoffzufuhreinstellwert in etwa der Vollgasposition des Einstellelementes für die Kraftstoffzufuhrentspricht.

4. Betätigungseinrichtung nach einem der Ansprüche 1 bis 3, dadurch gekennzeichnet, daß die Einstelleinrichtung zur Erfassung der Kraftmaschinendrehzahl ein an der Verbrennungslraftmaschine angeschlossener Drehzahlgeber (34) ist.

5. Betätigungseinrichtung nach einem der Ansprüche 1 bis 4, dadurch gekennzeichnet, daß als ein oberer Umschaltpunlt (O), bei dem eine Herunterschaltung der Kraftmaschinendrehzahl erfolgen soll, ein oberer Drehzahlwert (nₒ) vorgegeben wird, der in der Nähe der Nenndrehzahl (n_{N}) der Kraftmaschine liegt.

6. Betätigungseinrichtung nach Anspruch 5, dadurch gekennzeichnet, daß der obere Drehzahlwert (nₒ) maximal um 30 U/min von der Nenndrehzahl (n_{N}) der Kraftmaschine abweicht.

7. Betätigungseinrichtung nach einem der Ansprüche 1 bis 6, dadurch gekennzeichnet, daß der untere Umschaltpunkt (U) so eingestellt ist, daß der zugehörige Drehmomentenwert etwas größer ist als der Drehmomentenwert, der dem oberen Umschaltpunkt (O) zugeordnet ist.

8. Betätigungseinrichtung nach einem der Ansprüche 1 bis 7, dadurch gekennzeichnet, daß ein manuell betätigbarer Schalter (35) mit wenigstens drei Schaltpositionen vorgesehen ist, wobei in einer Position der Automatilbetrieb einschaltbar ist, während bei den anderen Positionen bestimmte Getriebeschaltstufen einstellbar sind.

## Revendications

1. Actuator for changing a gear mechanism (10), in particular with power shifting stage, which is mounted behind an internal combustion engine and by which, as a function of the engine load, changing between at least two speed transmission ratios can be performed, with a switching device (33) which is connected to an adjusting element (40) for the fuel supply, with a device (34) for detecting the engine speed and with a control unit (36), wherein the signais of the switching device (33) and of the speed detector (34) are delivered to the control unit (36) and, on exceeding orfalling below a presettable fuel supply adjusting value as well as at least one presettable engine speed value (nᵤ, nₒ), the control unit (36) delivers control signais for automatic changing to the gear mechanism (10), characterised in that as a lower changing point (U) at which the engine speed is to be changed up, there is preset a lower speed value (nᵤ) which is ap- proximately at the speed at which the engine power reaches its upper power level.

2. Actuator according to claim 1, characterised in that the switching device (33) contains a limit switch which is mounted in the region of the throttle linkage and can be actuated by the latter.

3. Actuator according to claim 1 or 2, characterised in that the presettable fuel supply adjusting value ap- proximately corresponds to the full throttle position of the adjusting element for the fuel supply.

4. Actuator according to any of claims 1 to 3, characterised in that the adjusting device for detecting the engine speed is a speed sensor (34) connected to the internai combustion engine.

5. Actuator according to any of claims 1 to 4, characterised in that as an upper changing point (O) at which the engine speed is to be changed down, there is preset an upper speed value (nₒ) which is in the vicinity of the nominal speed (n_{N}) of the engine.

6. Actuator according to claim 5, characterised in that the upper speed value (nₒ) deviates from the nominal speed (n_{N}) of the engine by a maximum of 30 r.p.m.

7. Actuator according to any of claims 1 to 6, characterised in that the lower changing point (U) is set so that the associated torque value is slightly greater than the torque value which is associated with the upper changing point (O).

8. Actuator according to any of claims 1 to 7, characterised in that a manually operated switch (35) with at least three switching positions is provided, wherein in one position automatic operation can be engaged, while in the other positions certain gear shift steps can be set.

## Claims

1. Systeme de commande pour le changement de vitesse dans une transmission (10), montée a la suite d'un moteur a combustion et dotée notamment d'un étage de commande en charge, qui permet d'entreprendre, en fonction de la charge du moteur, une commutation entre au moins deux rapports de transmission de regime, ce système comprenant un dispositif de commutation (33), relié à un élément de réglage (40) de I'alimentation en carburant, un element (34) pour enregistrer le regime du moteur et une unite de commande (36), les signaux du dispositif de commutation (33) et de I'element enregistreur de regime (34) étant fournis a l'unite de commande (36) et l'unite de commande (36), en cas de dépassement ou de sous- dépassement d'une valeur allouable de réglage de I'alimentation en carburant ainsi que d'au moins une vaₗeur allouable de regime moteur (nᵤ, no), délivrant des signaux de commande a la transmission (10) pour le changement de vitesse automatique, caractérisé en ce qu'on alloue, comme point de commutation inférieur (U) auquel devrait avoir lieu une commutation augmentant le regime du moteur, une valeur infé- rieure de regime (nᵤ) qui correspond approximativement au regime auquel la puissance du moteur atteint son niveau supérieur.

2. Système de commande selon la revendication 1, caractérisé en ce que le dispositif de commutation (33) comprend un commutateur de fin de course, qui est monté dans la region de la tringlerie de la pédale d'ac- célérateur et peut être actionné par cette dernière.

3. Système de commande selon la revendication 1 ou 2, caractérisé en ce que la valeur allouable de réglage de I'alimentation en carburant correspond approximativement a la position plein gaz de I'element de réglage de I'alimentation en carburant.

4. Système de commande selon l'une quelconque des revendications 1 a 3, caractérisé en ce que I'element pourenregistrer le regime du moteurest un transmetteurde regime (34) raccordé au moteur à combustion.

5. Système de commande selon l'une quelconque des revendications 1 a 4, caractérisé en ce qu'on alloue, comme point de commutation supérieur (O) auquel devrait avoir lieu une commutation diminuant le regime moteur, une valeur supérieure de regime (no) qui est proche du regime nominal (n_{N}) du moteur.

6. Système de commande selon la revendication 5, caractérisé en ce que la valeur supérieure de regime (no) diffère au maximum de 30 tr/min du regime nominal (n_{N}) du moteur.

7. Système de commande selon l'une quelconque des revendications 1 a 6, caractérisé en ce que le point de commutation inférieur (U) est réglage de telle sorte que la valeur de couple qui lui est associée est légèrement supérieure a la valeur de couple associée au point de commutation supérieur (O).

8. Système de commande selon l'une quelconque des revendications 1 a 7, caractérisé en ce qu'est prévu un commutateur (35), qui peut être actionné a la main et qui présente au moins trois positions de commutation, le fonctionnement automatique pouvant être enclenché dans une de ces positions, tandis que les autres positions permettent de régler des étages donnés de la transmission.
